# EUROPÄISCHE PATENTSCHRIFT

(11) **EP 2 701 926 B1**
(45) Veröffentlichungstag und Bekanntmachung des Hinweises auf die Patenterteilung: **12.08.2015**
(21) Anmeldenummer: 12717322.7
(22) Anmeldetag: 27.04.2012
(51) Int. Cl.: B60C 1/00, C08K 3/06, C08K 3/36, C08K 5/37, C08K 5/39, C08L 21/00, C08K 5/3415, C08K 5/38, C08K 5/41, C08K 5/548, C08L 9/06

(54) **VERFAHREN ZUR HERSTELLUNG VON KAUTSCHUKMISCHUNGEN**
METHOD FOR PRODUCING RUBBER MIXTURES
PROCÉDÉ DE PRODUCTION DE MÉLANGES DE CAOUTCHOUC

(30) Priorität: 29.04.2011 EP 11164320
(43) Veröffentlichungstag der Anmeldung: 05.03.2014
(73) Patentinhaber: LANXESS Deutschland GmbH, 50569 Köln (DE)
(72) Erfinder: WIEDEMEIER, Melanie, 41540 Dormagen (DE); WEIDENHAUPT, Hermann-Josef, 50259 Pulheim (DE); UNTERBERG, Heinz, 41540 Dormagen (DE); FELDHUES, Ulrich, 51465 Bergisch-Gladbach (DE)
(86) Internationale Anmeldenummer: PCT/EP2012/057859
(87) Internationale Veröffentlichungsnummer: WO 2012/146759

(56) Entgegenhaltungen:
- EP-A1- 0 859 024
- EP-A1- 1 197 518
- EP-A1- 1 508 590
- EP-A1- 2 305 490
- EP-A2- 0 432 417
- US-A1- 2003 015 271
- US-A1- 2009 036 579
- US-A1- 2010 113 663

## Beschreibung

Die vorliegende Erfindung betrifft ein Verfahren zur Herstellung von Kautschukmischungen und daraus hergestellte Kautschukmischungen.

Für die Herstellung von Reifenlaufflächen mit einer guten Eigenschaftskombination von Rollwiderstand, Nassrutschfestigkeit und Abrieb, wie sie für PKW-Reifenlaufflächen gefordert wird, ist die Verwendung kieselsäurehaltiger Kautschukmischungen bekannt. Für die Erzielung der gewünschten Eigenschaftskombination ist es wichtig, die Kieselsäure gut zu dispergieren und bei der Vulkanisation an die Kautschukmatrix anzukoppeln. Hierfür werden bei der Mischungsherstellung schwefelhaltige organische Silane eingesetzt (z. B.: DE-A-24 47 614; US-A-4,709,065; EP-A-0 501 227; EP-A-99 074; DE-A-3 813 678 sowie EP-A-447 066). Des Weiteren werden in der DE-A 2 255 577 und DE 4 435 311, EP-A1 0 0670 347 sowie US-A-4 709 065 bestimmte polysulfidische Silane als Verstärkungsadditive für kieselsäurehaltige Kautschukvulkanisate beschrieben.

US 2010-113663 A1 und EP 1197518 A1 offenbaren rußgefüllte Kautschukmischungen, jedoch nicht die Verwendung von 1,6-Bis(N,N-dibenzylthiocarbamoyldithio)hexan. US 2009-036579 A1 lehrt ruß- und/oder silicagefüllte Kautschukmischungen, jedoch nicht die Verwendung von 1,6-Bis(N,N-dibenzylthiocarbamoyldithio)hexan. EP 2305490 A1 beschreibt als Vergleichsbeispiel eine Kautschukmischung, bei der 1,3-Bis(citraconimidomethyl)benzol als Reversionsschutzmittel verwendet wurde.

EP 0432417 A2 offenbart rußgefüllte Kautschukmischungen enthaltend 1,6-Bis(N,N-dibenzylthio-carbamoyldithio)hexan, welches jedoch nicht in der ersten Mischstufe eingemischt wird. Zudem lehrt dieses Dokument in der Fußnote zu Tabelle 1 dass "nur mit der Bis(dithio)ethanbrücke ein Abrieb erreichbar ist, der mit den klassischen Schwefelvulkanisaten vergleichbar ist" und impliziert damit, dass mit 1,6-Bis(N,N-dibenzylthiocarbamoyldithio)hexan keine günstige Abriebwerte erzielt werden können.

US 2003/015271 A1 offenbart die Verwendung von 1,3-Bis (citraconimidomethyl)benzol in silicagefüllten Kautschukmischungen. EP 0859024 A1 beschreibt silicagefüllte Kautschukmischungen im Allgemeinen. EP 1508590 A1 lehrt hingegen die Verwendung von fluoriertem Graphit als Reversionsschutzmittel in Kautschukmischungen.

Die Verwendung von Reversionsschutzmittel in Kautschukcompounds ist bekannt und wird beispielsweise in folgenden Patenten beschrieben: EP 1134253, EP 0 489 313, EP 1000968 sowie DE-OS 2 255 577. Üblicherweise werden die Reversionsschutzmittel zusammen mit dem Schwefel und den Beschleunigern im letzten Schritt in die Mischung gegeben.

Dem Fachmann ist bekannt, dass bei Mischungen mit hohem Füllstoffgehalt während des Mischvorgangs sehr hohe Temperaturen im Bereich von 140°C - 170°C erreicht werden. Diese hohen Temperaturen lassen eine Zugabe der Vernetzungschemikalien wie Beschleuniger, Peroxide und Vulkanisationsharze aufgrund ihrer Temperaturempfindlichkeit nicht zu. Für diese Mischungen wird eine zweite Mischstufe auf dem Walzwerk oder im Innenmischer nachgeschaltet. In dieser werden Temperaturen oberhalb 120°C vermieden. Diese zwei Mischstufen werden Grundmischen und Fertigmischen genannt (Röthemeyer, Sommer, 2006, Kautschuktechnologie, Seite 389 ff und Rapra Review Report, 1996, Rubber Mixing).

Ein Zweistufenverfahren wird vorzugsweise für die Mischung mit hohen Füllstoffanteilen, kleinen Weichmachermengen oder hochaktivem Russ angewandt. Die Grundmischung wird nach dem Ausformen über mehrere Stunden zwischengelagert und abgekühlt und dem Innenmischer in der Fertigmischstufe noch einmal zusammen mit den Vernetzungschemikalien zugeführt (Röthemeyer, Sommer, 2006, Kautschuktechnologie, Seite 389 ff und Rapra Review Report, 1996, Rubber Mixing).

Hochgefüllte Kautschukmischungen können zum Teil einem sogenannten Nachzwicken unterworfen werden, bei dem die Mischungsviskosität nach dem Grundmischen in einem separaten Mischgang verbessert wird. Die gesamte Mischungsherstellung erfolgt in diesem Fall im Dreistufenverfahren (Röthemeyer, Sommer, 2006, Kautschuktechnologie, Seite 389 ff und Rapra Review Report, 1996, Rubber Mixing), wobei auch hier die Zugabe der Reversionsschutzmittel im letzten Schritt erfolgt.

In der DE102007020451A1 wird davon ausgegangen, dass bei der thermomechanischen Behandlung der Kautschukmischung im ersten und zweiten Mischschritt eine Anvulkanisation (Anscorchen) der Mischung verhindert werden muss. Aus diesem Grund wird die thermomechanische Behandlung ohne Zusätze, die zu einer Anvulkanisation der Mischung führen würden, durchgeführt. Daher soll die Zugabe von Vulkanisationsbeschleunigern und gegebenenfalls auch von Schwefeldonoren, verkappten Bismercaptanen sowie Schwefel und gegebenenfalls von Zinkoxid und Stearinsäure am Ende des zweiten Mischschritts nach Abkühlung der Mischung auf Temperaturen < 120°C erfolgen.

Aufgabe der Erfindung ist es daher, ein Verfahren zur Herstellung von Kautschukmischungen bereitzustellen, welches die physikalischen und mechanischen Eigenschaften unvulkanisierter und vulkanisierter Kautschukmischungen, wie etwa Rollwiderstand und Abrieb, verbessert und eine Reduzierung der Vulkanisationszeit aufweist, ohne dass die Kautschukmischung eine wesentliche Änderung der Netzwerkdichte aufzeigt.

Es ist bekannt, dass 1,6-Bis(N,N-dibenzylthiocarbamoyldithio)hexan (CAS-Nr.: 151900-44-6) ein Reversionsschutzmittel ist, das bei der Vernetzung Carbasulfannetzstellen einbaut und dadurch ein reversionsstabiles Netzwerk erzeugt und dabei Schwefel-Kohlenstoffnetzwerk freisetzt, sog. Hybridvernetzung. Vor diesem Hintergrund kann es auch als Schwefeldonor bezeichnet werden und wird üblicherweise erst im letzten Mischschritt zusammen mit Schwefel und Vulkanisationsbeschleunigern hinzugegeben.

Somit herrscht das Vorurteil, dass Reversionsschutzmittel, bekannt als Schwefeldonoren, nicht bereits in der 1. Mischstufe bei hohen Temperaturen eingemischt werden sollen, damit die Weiterverarbeitung der Kautschukmischung nicht aufgrund vorzeitiger Vernetzung verhindert wird.

Gegenstand der Erfindung ist daher ein Verfahren zur Herstellung von Kautschukmischungen in einem Mischprozess mit mehreren Mischstufen, wobei diese ggf. in mehrere Teilschritte unterteilt sein können, umfassend das Mischen folgender Komponenten:
- ein oder mehrere Kautschuke,
- ein oder mehrere hydroxylgruppen-haltige oxidische Füllstoffe,
- ein oder mehrere schwefelhaltige siliciumorganische und/oder eine oder mehrere hydroxypolysulfidische Verbindungen,
- 1,6-Bis(N,N-dibenzylthiocarbamoyldithio)hexan (CAS-Nr.: 151900-44-6), wobei dieses in der ersten Mischstufe eingemischt wird,
- ein oder mehrere Vulkanisationsadditive,
- ein oder mehrere Kautschukadditive.

Überraschend wurde festgestellt, dass Reversionsschutzmittel in Kombination mit Kieselsäure und Silanen in der ersten Mischstufe bei > 80°C eingesetzt werden können, ohne dass die Mischungsviskosität Mooney ML 1+4 wesentlich erhöht wird, so dass die Kautschukmischung weiterverarbeitet werden kann.

Vorzugsweise werden die Reversionsschutzmittel in der ersten Mischstufe in mindestens zwei Teilschritten, vorzugweise in mindestens zwei Portionen, zugesetzt.

Stand der Technik ist, dass bei Einsatz von 1,6-Bis(N,N-dibenzylthiocarbamoyldithio)hexan (CAS-Nr.: 151900-44-6) (Vulcuren^{®}) in der letzten Mischstufe in kieselsäurehaltigen Kautschukmischungen der Schwefelanteil reduziert werden muss, um eine Übervulkanisation zu verhindern, was eine Rezepturanpassung erforderlich macht.

Bei dem erfindungsgemäßen Einsatz des Reversionsschutzmittels in der ersten Mischstufe muss der Schwefelanteil überraschenderweise nicht reduziert werden. Die Vulkanisationszeit kann deutlich verkürzt werden, so dass eine erhebliche Kostenreduzierung und Profitabilitätssteigerung im Produktionsprozess z.B. beim Endartikel Reifen, ermöglicht wird.

Für das erfindungsgemäße Verfahren werden Kautschuke eingesetzt, die bevorzugt solche auf Basis von Dienen einschließen, wie insbesondere doppelbindungshaltige Kautschuke, die praktisch keinen Gelanteil enthalten und die nach DIN/ISO 1629 als R-Kautschuke bezeichnet werden. Diese Kautschuke haben Doppelbindungen in der Hauptkette. Bevorzugt verwendete Kautschuke sind beispielsweise solche auf Basis von
- NR: Naturkautschuk
- SBR: Styrol/Butadienkautschuk
- BR: Polybutadienkautschuk
- IR: Polyisopren
- SIBR: Styrol/Isopren-Kautschuk
- NBR: Nitrilkautschuk
- IIR: Butylkautschuk (Isobuten/Isopren-Kautschuk)
- HNBR: Hydrierter Nitrilkautschuk
- SNBR: Styrol/Butadien/Acrylnitril-Kautschuk
- CR: Polychloropren
- XSBR: carboxylierter Styrol/Butadien-Kautschuk
- XNBR: Carboxylierter Butadien/Acrylnitril-Kautschuk
- ENR: Epoxydierter Naturkautschuk
- ESBR: Epoxydierter StyrolButadien-Kautschuk
und Mischungen davon.

Doppelbindungshaltige Kautschukkomponenten schließen erfindungsgemäß auch solche ein, die nach DIN/ISO 1629 M-Kautschuke sind und neben der gesättigten Hauptkette Doppelbindungen in Seitenketten aufweisen. Hierzu gehört z. B. EPDM.

Bevorzugte Kautschukkomponenten sind erfindungsgemäß: NR, BR, SBR, IIR und EPDM.

Besonders bevorzugt sind NR, BR sowie Styrol/Diolefine sowie Mischungen dieser Kautschuke.

Unter Styrol/Diolefin (insbesondere Butadien)-Kautschuken werden sowohl Lösungs-SBR-Kautschuke abgekürzt: L-SBR als auch Emulsion-SBR-Kautschuke, abgekürzt: E-SBR verstanden. Unter L-SBR versteht man kautschukartige Polymere, die in einem Lösungsprozess auf der Basis von Vinylaromaten und konjugierten Dienen hergestellt werden (H. L. Hsieh, R. P. Quirk, Marcel Dekker Inc. New York-Basel 1996 ; I. Franta Elastomers and Rubber Compounding Materials ; Elsevier 1989, Seite 73-74, 92-94 ; Houben-Weyl, Methoden der Organischen Chemie, Thieme Verlag, Stuttgart, 1987, Band E 20, Seiten 114 bis 134 ; Ullmann's Encyclopedia of Industrial Chemistry, Vol A 23, Rubber 3. Synthetic, VCH Verlagsgesellschaft mbH, D-69451 Weinheim, 1993, S. 239-364 sowie (FR 2 295 972)). Geeignete vinylaromatische Monomere sind Styrol, o-, m- und p-Methylstyrol, technische Methylstyrolgemische, p-tert.-Butylstyrol, &agr;-Methylstyrol, p-Methoxystyrol, Vinylnaphthalin, Divinylbenzol, Trivinylbenzol und Divinylnaphthalin. Bevorzugt ist Styrol. Der Gehalt an einpolymerisiertem Vinylaromat liegt bevorzugt zwischen 5 bis 50 Gew.-%, bevorzugter zwischen 10 bis 40 Gew.-%. Geeignete Diolefine sind 1,3-Butadien, Isopren, 1,3-Pentadien, 2,3-Dimethylbutadien, 1-Phenyl-1,3-butadien und 1,3-Hexadien. Bevorzugt sind 1,3-Butadien und Isopren. Der Gehalt an einpolymerisierten Dienen liegt zwischen 50 bis 95 Gew.-%, bevorzugt zwischen 60 bis 90 Gew.-%. Der Gehalt an Vinylgruppen im einpolymerisierten Dien liegt zwischen 10 und 90%, der Gehalt an 1,4-trans-ständigen Doppelbindungen beträgt zwischen 20 und 80% und der Gehalt an 1,4-cis ständigen Doppelbindungen ist komplementär zur Summe aus Vinylgruppen und 1,4-trans-ständigen Doppelbindungen. Der Vinylgehalt des L-SBR beträgt vorzugsweise > 20%.

Üblicherweise sind die polymerisierten Monomeren und die unterschiedlichen Dien-Konfigurationen statistisch im Polymeren verteilt. Auch Kautschuke mit blockartig aufgebauter Struktur, die als Integralkautschuk bezeichnet werden, sollen unter die Definition von L-SBR (A) fallen (K.-H. Nordsiek, K.-H. Kiepert, GAK Kautschuk Gummi Kunststoffe 33 (1980), no. 4, 251-255).

Unter L-SBR sollen sowohl lineare als auch verzweigte oder endgruppenmodifizierte Kautschuke verstanden werden. Beispielsweise sind hier genannt: FR 2 053 786 und JP-A-56-104 906. Als Verzweigungsmittel wird bevorzugt Siliciumtetrachlorid bzw. Zinntetrachlorid eingesetzt.

Die Herstellung der Kautschukkomponente für die erfindungsgemäßen Kautschukmischungen erfolgt insbesondere durch anionische Lösungspolymerisation, d. h. mittels eines Katalysators auf Alkali- oder Erdalkalimetallbasis in einem organischen Lösungsmittel.

Die in Lösung polymerisierten Vinylaromat/Diolefin-Kautschuke besitzen vorteilhaft Mooneywerte zwischen 20 und 150 Mooneyeinheiten, vorzugsweise 30 bis 100 Mooneyeinheiten. Insbesondere die hochmolekularen E-SBR-Typen mit Mooneywerten > 80 ME können Öle in Mengen von 30 bis 100 Gew.-Teile bezogen auf 100 Gew.-Teile Kautschuk enthalten. Die ölfreien L-SBR-Kautschuke weisen Glastemperaturen von -80° bis +20°C auf, bestimmt durch Differentialthermoanalyse (DSC).

Unter E-SBR versteht man kautschukartige Polymere, die in einem Emulsionsprozess auf der Basis von Vinylaromaten, konjugierten Dienen und gegebenenfalls weiteren Monomeren hergestellt werden Ullmann's Encyclopedia of Industrial Chemistry, Vol A 23, Rubber 3. Synthetic, VCH Verlagsgesellschaft mbH, D-69451 Weinheim, 1993, S. 247-251). Vinylaromaten sind Styrol, p-Methylstyrol und alpha-Methylstyrol. Diene sind insbesondere Butadien und Isopren. Weitere Monomere sind insbesondere Acrylnitril. Die Gehalte an Vinylaromaten liegen zwischen 10 und 60 Gew.-%. Die Glastemperatur liegt zwischen -50 und +20°C (bestimmt mittels DSC) und die Mooneywerte zwischen 20 und 150 Mooneyeinheiten. Insbesondere die hochmolekularen E-SBR-Typen mit Mooneywerten > 80 ME können Öle in Mengen von 30 bis 100 Gew.-Teile bezogen auf 100 Gew.-Teile Kautschuk enthalten. Die ölfreien L-SBR-Kautschuke weisen Glastemperaturen von -80° bis +20°C auf, bestimmt durch Differentialthermoanalyse (DSC).

Polybutadien (BR) umfasst insbesondere zwei unterschiedliche Polybutadien-Typklassen. Die erste Klasse weist einen 1,4-cis-Gehalt von mindestens 90% auf und wird mit Hilfe von Ziegler/Natta-Katalysatoren auf der Basis von Übergangsmetallen hergestellt. Vorzugsweise werden Katalysatorsysteme auf der Basis von Ti-, Ni-, Co- und Nd- eingesetzt ( Houben-Weyl, Methoden der Organischen Chemie, Thieme Verlag, Stuttgart, 1987, Band E 20, Seiten 114 bis 134 ; Ullmann's Encyclopedia of Industrial Chemistry, Vol A 23, Rubber 3. Synthetic, VCH Verlagsgesellschaft mbH, D-69451 Weinheim, 1993, S. 239-364 ). Die Glastemperatur dieses Polybutadien liegt bevorzugt bei ≤ -90°C (bestimmt mittels DSC).

Die zweite Polybutadientypklasse wird mit Li-Katalysatoren hergestellt und weist Vinylgehalte von 10% bis 80% auf. Die Glastemperaturen dieser Polybutadienkautschuke liegen im Bereich von -90 bis +20°C (bestimmt mittels DSC).

Erfindungsgemäß bevorzugt wird die Kautschukkomponente ausgewählt aus der Gruppe, die besteht aus: Styrol/Butadien-Kautschuken und Polybutadien, wobei diese Kautschuke auch mit Mineralölen verstreckt sein können.

Das Verhältnis der übrigen Komponenten zu den Kautschukkomponenten wird üblicherweise in der relativen Mengenangabe phr (Parts per hundred Parts rubber) angegeben. Üblicherweise werden auf 100 Gew.-Teile der Kautschukkomponenten, 5 bis 100 Gew.-Teile des hydroxylgruppen-haltigen oxidischen Füllstoffs (entsprechend 5 bis 100 phr), 0,1 phr bis 10 phr, vorzugsweise 0,2 phr bis 5 phr der schwefelhaltigen siliciumorganischen Verbindung d), vorzugsweise Bis(triethoxisilylpropyl)-tetrasulfid oder Bis(triethoxysilylpropyl)disulfid, 0,1 bis 10 phr Reversionsschutzmittel, vorzugsweise 0,2 bis 5 phr, sowie 0,1 bis 20 phr Vulkanisationsadditive (wie zum Beispiel Öle, Ozonwachse, Alterungsschutzmittel).

Bevorzugt enthalten die erfindungsgemäßen Mischungen des Weiteren Ruß in Mengen von 1 bis 100 phr.

### Hydroxylgruppenhaltiger oxidischen Füllstoff:

Als hydroxylgruppenhaltiger oxidischer Füllstoff wird vorzugsweise ein siliziumhaltiger oxidischer hydroxylgruppen-haltiger Füllstoff, wie insbesondere Kieselsäure eingesetzt. Derartige insbesondere hydrophile Kieselsäuren tragen insbesondere an der Oberfläche Hydroxylgruppen.

Kieselsäure oder "Idquor;Silica" ( Ullmann's Encyclopedia of Industrial Chemistry, VCH Verlagsgesellschaft mbH, D-69451 Weinheim, 1993, "Silica", S. 635-645 ), wird insbesondere als pyrogene Kieselsäure (ibid. S. 635-642) oder als gefällte Kieselsäure (ibid. 642-645) eingesetzt, wobei erfindungsgemäß die gefällte Kieselsäure bevorzugt wird. Die gefällten Kieselsäuren haben eine spezifische Oberfläche von 5 bis 1000 m2/g bestimmt nach BET vorzugsweise eine spezifische Oberfläche von 20 bis 400 m2/g. Sie werden durch Behandlung von Wasserglas mit anorganischen Säuren erhalten, wobei vorzugsweise Schwefelsäure eingesetzt wird. Die Kieselsäuren können gegebenenfalls auch als Mischoxide mit anderen Metalloxiden, wie Al-, Mg-, Ca-, Ba-, Zn-, Zr-, Ti-Oxiden vorliegen.

Bevorzugt werden erfindungsgemäß Kieselsäuren mit spezifischen Oberflächen von 5 bis 1000 m2/g, bevorzugter 20 bis 400 m2/g, jeweils bestimmt nach BET, eingesetzt.

Der erfindungsgemäß verwendete hydroxylgruppenhaltige oxidische Füllstoff wird bevorzugt in Mengen von 5 bis 150 phr, vorzugsweise 30 bis 100 phr bezogen auf 100 phr (Parts per 100 Parts rubber) eingesetzt, wobei der hydroxylgruppenhaltige oxidische Füllstoff mindestens 30%, vorzugsweise mindestens 50% des Füllstoffanteils bezogen auf die Gesamtmenge der eingesetzten Füllstoffe ausmacht.

### Schwefelhaltige siliciumorganische Verbindungen:

Die schwefelhaltigen siliciumorganischen Verbindungen enthalten vorzugsweise ein oder mehrere Alkoxysilyl-, bevorzugt eine oder mehrere Trialkoxysilylgruppen.

Bevorzugte schwefelhaltige Organosiliciumverbindungen sind Bis(tri-ethoxy-silyl-propylpolysulfane); solche Produkte sind beispielsweise kommerziell unter dem Namen Silan Si 75 und als Silan Si 69 (CAS-Nr.: 40372-72-3) der Fa. Degussa verfügbar.

Die schwefelhaltigen siliciumorganischen Verbindungen werden zweckmäßig in Gesamtmengen von 0,2 phr bis 12 phr eingesetzt.

Erfindungsgemäß ist es wesentlich, dass die schwefelhaltigen siliciumorganischen Verbindungen in mindestens zwei separaten Portionen zugesetzt werden. Separat bedeutet, dass zwischen der Zugabe der Portionen ein zeitlicher Abstand liegt. Dem Fachmann ist klar, was dies in der Praxis bedeutet, ohne dass eine untere Grenze für den zeitlichen Abstand festgelegt wird. Bevorzugt liegt der zeitliche Abstand mindestens bei etwa 1 Minute, die jedoch stark abhängig von Kautschukmischung und Mischapparatur. Bevorzugt erfolgt die Zugabe während mindestens Mischstufe bei erhöhten Temperaturen von insbesondere mehr als 60°C.

### Reversionsschutzmittel:

Erfindungsgemäß verwendetes Reversionsschutzmittel ist vorzugsweise 1,6-Bis-(N,N-dibenzyl-thiocarbamoyldithio)hexan (CAS-Nr.: 151900-44-6).

Es kann vorzugsweise einzeln oder in Kombination mit anderen Reversionsschutzmitteln, insbesondere mit 1,3-Bis((3-methyl-2,5-dioxopyrrol-1-yl)methyl)benzol (CAS-Nr.. 119462-56-5) oder Hexamethylen-1,6-bis(thiosulfat), Dinatriumsalz, Dihydrat (CAS-Nr.: 5719-73-3), eingesetzt werden. Bevorzugt werden diese in der ersten Mischstufe in Kombination mit Kieselsäure und Alkoxysilanen eingesetzt, besonders bevorzugt in zwei separaten Portionen zur Kautschukmischungen zugegeben.

Bevorzugt wird mindestens 0,5 bis 10 Gew.-% Reversionsschutzmittel, vorzugsweise 0,5 bis 5 Gew.-% und besonders bevorzugt 0,5 bis 3 Gew.-% eingesetzt.

### Vulkanisationsadditive:

Erfindungsgemäß verwendete Vulkanisationsmittel sind insbesondere Schwefel oder Schwefelspender wie zum Beispiel Dithiomorpholin (DTDM) oder 2-(4-Morpholinodithio)benzothiazol (MBSS). Schwefel und Schwefelspender werden in Mengen von beispielsweise 0,1 bis 15 Gewichtsteilen, bevorzugt 0,1-10 Gewichtsteile, bezogen auf die gesamte Menge an Kautschuk eingesetzt.

### Kautschukadditive:

Zu den erfindungsgemäß eingesetzten Kautschukadditiven zählen insbesondere die Vulkanisationsbeschleuniger. Beispiele für geeignete Vulkanisationsbeschleuniger sind z. B. Mercaptobenzthiazole, -sulfenamide, Guanidine, Thiuramdisulfide, Dithiocarbamate, Thioharnstoffe, Thiocarbonate sowie Dithiophosphate etc. ( Ullmann's Encyclopedia of Industrial Chemistry, VCH Verlagsgesellschaft mbH, D-69451 Weinheim, 1993, vol A 23 "Chemicals and Additives", S. 366-417).

Die Vulkanisationsbeschleuniger werden zweckmäßig nicht in einem Mischschritt bei erhöhten Temperaturen zugesetzt, der zur Aktivierung des hydroxylgruppenhaltigen oxidischen Füllstoffs, wie der Kieselsäure mittels der schwefelhaltigen siliciumorganischen Verbindungen durchgeführt wird, eingesetzt, da sie zu einer vorzeitigen Anvulkanisation der Mischung führen würden. Sie werden daher bevorzugt nach Zugabe der schwefelhaltigen siliciumorganischen Verbindungen bei Temperaturen von bevorzugt unter 100°C eingearbeitet.

Die Vulkanisationsbeschleuniger werden bevorzugt in Mengen von 0,1 bis 15 Gewichtsteilen, bevorzugt 0,1-10 Gewichtsteilen, bezogen auf die gesamte Menge an Kautschuk eingesetzt.

Die erfindungsgemäß hergestellten Kautschukmischungen enthalten bevorzugt mindestens einen Vulkanisationsbeschleuniger. Häufig enthalten die Mischungen mehrere Beschleuniger gegebenenfalls in Kombination mit Aktivatoren.

Die erfindungsgemäß hergestellten Kautschukmischungen enthalten bevorzugt weitere an sich bekannte Kautschukadditive.

Dazu zählen insbesondere auch weitere Füllstoffe, wie insbesondere Ruß, welcher in den erfindungsgemäß hergestellten Kautschukmischungen bevorzugt verwendet wird.

Erfindungsgemäß hergestellte Ruße (E) siehe „carbon" bzw. „carbon black" ( Ullmann's Encyclopedia of Industrial Chemistry, VCH Verlagsgesellschaft mbH, D-69451 Weinheim, 1993, vol A 5 "Carbon Black", S. 95-158) werden bevorzugt nach dem gas black-, furnace black-, lamp black- und thermal black-Verfahren hergestellt und werden nach der neuen ASTM-Nomenklatur (ASTM D 1765 und D 2516) als N 110, N 115, N 121, N 125, N 212, N 220, N 231, N 234, N 242, N 293, N 299, S 315, N 326, N 330, N 332, N 339, N 343, N 347, N 351, N 375, N 472, N 539, N 550, N 582, N 630, N 642, N 650, N 660, N 683, N 754, N 762, N 765, N 772, N 774, N 787, N 907, N 908 N 990, N 991 S 3 etc. bezeichnet. Die erfindungsgemäß verwendeten Ruße besitzen bevorzugt BET-Oberflächen zwischen 5 bis 200 m2/g.

Ruß wird erfindungsgemäß bevorzugt in Mengen von 0 bis 120 phr, vorzugsweise 1 bis 100 phr, noch bevorzugter 5 bis 80 phr eingesetzt.

Erfindungsgemäß liegt die Gesamtmenge von hydroxylgruppenhaltigem oxidischen Füllstoff b) und Ruß bevorzugt bei 20 bis 160 phr, vorzugsweise 25 bis 140 phr.

Weitere Füllstoffe, die gegebenenfalls eingesetzt werden, sind:
- synthetische Silikate, wie Aluminiumsilikat, Erdalkalisilikat, wie Magnesiumsilikat oder Calciumsilikat mit BET-Oberflächen von 20-400 m2/g und Primärteilchendurchmessern von 5-400 nm
- natürliche Silikate, wie Kaolin und andere natürlich vorkommende Kieselsäuren,
- Metalloxide, wie Zinkoxid, Calciumoxid, Magnesiumoxid, Aluminiumoxid,
- Metallcarbonate, wie Calciumcarbonat, Magnesiumcarbonat, Zinkcarbonat,
- Metallsulfate, wie Calciumsulfat, Bariumsulfat,
- Metallhydroxide, wie Aluminiumhydroxid und Magnesiumhydroxid,
- Glasfasern und Glasfaserprodukte (Latten, Stränge oder Mikroglaskugeln),
- Thermoplaste (Polyamid, Polyester, Aramid, Polycarbonat, syndiotaktisches 1,2 Polybutadien und trans-1,4-Polybutadien sowie Cellulose und Stärke

Weitere Kautschukadditive umfassen Alterungsschutzmittel, Lichtschutzmittel, Ozonschutzmittel, Verarbeitungshilfsmittel, Weichmacher, Mineralöl, Tackifier, Treibmittel, Farbstoffe, Pigmente, Wachse, Harze, Streckmittel, organische Säuren, Vulkanisationsverzögerer, Vulkanisationsaktivatoren, wie Zinkoxid, Stearinsäure, sowie Zinkstearat, Metalloxide, sowie weitere Füllstoffaktivatoren, wie beispielsweise Triethanolamin, Trimethylolpropan, Polyethylenglykol, Hexantriol, aliphatische Trialkoxysilane oder anderen, die in der Gummiindustrie bekannt sind ( Ullmann's Encyclopedia of Industrial Chemistry, VCH Verlagsgesellschaft mbH, D-69451 Weinheim, 1993, Vol A 23 "Chemicals and Additives", S. 366-417 ).

Die Kautschukadditive werden in üblichen Mengen, die sich u. a. nach dem Verwendungszweck richten, eingesetzt. Übliche Mengen für einzelne Kautschukadditive mit Ausnahme der weiteren Füllstoffe, wie insbesondere Ruß bzw. Mineralöl liegen beispielsweise bei 0,1 bis 50 phr.

Eine Vulkanisation der hergestellten Kautschukmischungen wird bevorzugt bei Temperaturen von 100-250°C, bevorzugt 130-180°C, gegebenenfalls unter Druck von 1 bis 100 bar durchgeführt.

Die hergestellten Kautschukmischungen eignen sich zur Herstellung verschiedener Reifenbauteile insbesondere für Reifenlaufflächen, Subtreads, Karkassen, Seitenwänden, verstärkten Seitenwänden für Notlaufreifen, Apexmischungen etc. sowie für die Herstellung von technischen Gummiartikeln wie Dämpfungselementen, Walzenbelägen, Belägen von Förderbändern, Riemen, Spinnkopsen, Dichtungen, Golfballkernen, Schuhsohlen, etc. Besonders geeignet sind die Mischungen für die Herstellung von Reifenlaufflächen, Subtreads, Karkassen und Apexmischungen. Reifen bzw. Reifenteile schließen dabei auch beispielsweise Laufflächen von Sommer-, Winter- und All-Seasons-Reifen sowie Laufflächen von PKW- und LKW-Reifen ein.

Anhand der nachfolgenden Beispiele wird die Erfindung näher erläutert, ohne dass dadurch eine Einschränkung der Erfindung bewirkt werden soll.

Die Herstellung der Kautschukmischungen erfolgt beispielsweise in folgenden Mischschritten:

### 1. Mischstufe:

- SBR und BR in einem Innenmischer vorlegen und ca. 30 Sekunden mischen
- Zugabe zweidrittel Kieselsäure, zweidrittel Silan sowie zweidrittel Reversionsschutzmittel, mischen für ca 60 Sekunden
- Zugabe eindrittel Kieselsäure, eindrittel Silan, eindrittel Reversionsschutzmittel sowie Öl, mischen ca. 60 Sekunden
- Zugabe von Russ, Öl, Alterungsschutzmitteln, Zinkoxid sowie Ozonschutzwachse, mischen für ca. 60 Sekunden

Dieser Mischungsvorgang kann bei Temperaturen zwischen 100 bis 170°C erfolgen, vorzugsweise im Bereich von 150°C.

### 2. Mischstufe:

Nach Abschluss der ersten Mischstufe wird das Mischstück von einem nachgeschalteten Walzwerk aufgenommen und zu einer Platte, einem Streifen oder Pellets ausgeformt und für 24 Stunden bei Raumtemperatur gelagert.

Verarbeitungstemperaturen liegen hierbei unter 60°C.

### 3. Mischstufe:

In der dritten Mischstufe erfolgt ein Nachzwicken bei 140 - 170°C, vorzugsweise bei 150°C zum Beispiel in einem Kneter /Innenmischer.

### 4. Mischstufe:

Zugabe von Vulkanisations-/Kautschukadditiven wie zum Beispiel Beschleuniger und Schwefel, vorzugsweise auf einer Walze bei niedrigen Temperaturen (< 80°C).

Geeignete Aggregate für die Mischungsherstellung sind an sich bekannt und schließen beispielsweise Walzen, Innenmischer oder auch Mischextruder ein.

Selbstverständlich können das oder die Reversionsschutzmittel anteilig auch in den Folgemischstufen eingesetzt werden; bevorzugt werden das oder die Reversionsschutzmittel vollständig in der ersten Mischstufe zugesetzt.

### Verwendete Substanzen:

- 1.: Buna® VSL 5025 der LANXESS Deutschland GmbH
- 2.: Buna® CB 24 der LANXESS Deutschland GmbH
- 3.: Vulkasil^{®} S der LANXESS Deutschland GmbH
- 4.: Tudalen 1849-1
- 5.: Zinkweiss Rotsiegel der Firma Grillo Zinkoxid GmbH
- 6.: Edenor^{®} C 18 98-100 der Firma Cognis Deutschland GmbH
- 7.: 2,2,4-Trimethyl-1,2-dihydrochinolin, polymerisiert (Vulkanox® HS/LG der LANXESS Deutschland GmbH)
- 8.: N-1,3-Dimethylbutyl-N'-phenyl-p-phenylendiamin (Vulkanox® 4020/LG der LANXESS Deutschland GmbH)
- 9.: Antilux® 654 der RheinChemie GmbH
- 10.: Bis(triethoxysilylpropyl)polysulfid (Si^{®} 69 der Degussa Hüls AG)
- 11.: Corax N 339 der Degussa Hüls AG
- 12.: Löslicher Schwefel (Mahlschwefel 90/95° Chancel^{®} der Firma Solvay Barium Strontium)
- 13.: N-Cyclohexyl-2-benzthiazylsulfenamid (Vulkacit® CZ der LANXESS Deutschland GmbH)
- 14.: Diphenylguanidin (Vulkacit® D/C der LANXESS Deutschland GmbH)
- 15.: 1,6-Bis-(N,N-dibenzyl-thiocarbamoyldithio)hexan. (Vulcuren® der LANXESS Deutschland GmbH, CAS-Nr.: 151900-44-6)

### Prüfungen der Kautschukmischung und der Vulkanisate:

### Mooney-Viskositätsmessung:

Die Viskosität lässt sich aus der Kraft, die Kautschuke (und Kautschukmischungen) ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird.

Die Viskosität wird zusammen mit den jeweiligen Prüfbedingungen angegeben, beispielsweise ML (1+4) 100°C (Mooney viscosity, large rotor, Vorwärmzeit und Prüfzeit in Minuten, Prüftemperatur).

Die Viskositäten der in Tabelle 1 genannten Kautschukmischungen werden mittels Scherscheibenviskosimeter nach Mooney gemessen.

Des Weiteren kann mit der gleichen Prüfung auch das "Scorch"-Verhalten einer Mischung gemessen werden. Die gewählte Temperatur ist in diesem Patent 130°C. Der Rotor läuft solang, bis der Drehmomentswert nach Durchlaufen eines Minimums auf 5 Mooney-Einheiten relativ zum Minimumswert angestiegen ist (t5). Je größer der Wert ist (hier Einheit Sekunden), umso langsamer findet die Anvulkanisation statt (hier hohe Scorch-Werte).

### Rheometer (Vulkameter) Ausvulkanisationszeit 170°C/t95:

Der Vulkanisationsverlauf am MDR (moving die rheometer) und dessen analytischen Daten werden an einem Monsanto-Rheometer MDR 2000 nach ASTM D5289-95 gemessen. Die Ergebnisse dieser Prüfung sind in Tabelle 2 zusammengestellt.

Bei der Ausvulkanisationszeit, wird die Zeit gemessen, bei der 95% des Kautschuks vernetzt ist. Die gewählte Temperatur war 170°C.

### Bestimmung der Härte in Anlehnung:

Zur Bestimmung der Härte der erfindungsgemäßen Kautschukmischung wurden 6 mm starke Walzfelle aus der Kautschukmischung gemäß Rezepturen der Tabelle 1 hergestellt. Aus den Walzfellen wurden Prüfkörper mit 35 mm Durchmesser geschnitten, deren Shore-Härte A -Werte mittels eines digitalen Shore-Härte-Testers (Zwick GmbH & Co. KG, Ulm) bestimmt wurden.

### Zugversuch:

Der Zugversuch dient direkt zur Ermittlung der Belastungsgrenzen eines Elastomers. Die Längenausdehnung beim Bruch wird auf die Ausgangslänge bezogen und entspricht der Bruchdehnung. Weiterhin wird auch die Kraft beim Erreichen bestimmter Dehnungsstufen, meist 50, 100, 200 und 300% bestimmt und als Spannungswert ausgedrückt (Zugfestigkeit bei der angegebenen Dehnung von 300% oder Modul 300).

Die Prüfergebnisse sind in Tabelle 1 aufgeführt.

### Dyn. Dämpfung:

Dynamische Prüfverfahren werden zur Charakterisierung des Verformungsverhaltens von Elastomeren unter periodisch veränderten Belastungen verwendet. Eine von außen angebrachte Spannung verändert die Konformation der Polymerkette.

Bei dieser Messung wird der Verlustfaktor tan delta indirekt über das Verhältnis zwischen Verlustmodul G" und Speichermodul G' bestimmt.

Anhand der nachfolgenden Beispiele wird die Erfindung näher erläutert, ohne dass dadurch eine Einschränkung der Erfindung bewirkt werden soll.

| **Ansatz-Nr.** | | | **Referenz** | **Beispiel 1** | **Beispiel 2** |
|---|---|---|---|---|---|
| | | | Gewichtsteile | Gewichtsteile | Gewichtsteile |
| BUNA CB 24 | BR | | 30 | 30 | 30 |
| BUNA VSL 5025-2 | SBR | | 96 | 96 | 96 |
| CORAX N 339 | Carbon Black | | 6,4 | 6,4 | 6,4 |
| VULKASIL S | Kieselsäure | | 80 | 80 | 80 |
| TUDALEN 1849-1 | Verarbeitungsadditiv | | 8 | 8 | 8 |
| EDENOR C 18 98-100 | Verarbeitungsadditiv | | 1 | 1 | 1 |
| VULKANOX 4020/LG | Alterungsschutz mittel | | 1 | 1 | 1 |
| VULKANOX HS/LG | Alterungsschutz mittel | | 1 | 1 | 1 |
| ZINKWEISS ROTSIEGEL | Beschleuniger | | 2,5 | 2,5 | 2,5 |
| ANTILUX 654 | Wachs | | 1,5 | 1,5 | 1,5 |
| SI 69 | Silan | | 6,4 | 6,4 | 6,4 |
| VULKACIT D/C | Beschleuniger | | 2 | 2 | 2 |
| VULKACIT CZ/C | Beschleuniger | | 1,5 | 1,5 | 1,5 |
| MAHLSCHWEFEL 90/95 CHANCEL | Schwefel | | 1,5 | 1,5 | 1,5 |
| VULCUREN | Reversionsschut zmittel | | | 1 | 0,5 |
| Mooney Viskosität (ML 1+4) | [ME] | DIN 53523 | 88 | 106 | 95 |
| Anvulkanisationszeit (MS-t5) | sec | in Anlehnung an ASTM D 5289-95 | 667,8 | 551 | 798 |
| Vulkanisationszeit (Umsatzzeit t95%) | s | DIN 53529 | 1223 | 262 | 544 |
| Härte | [Shore A] | DIN 53505 | 66 | 65 | 64 |
| Modul 300 | MPa | DIN 53504 | 15,7 | 19,5 | 15,3 |
| Bruchdehnung | % | DIN 53504 | 323 | 313 | 386 |
| Zugfestigkeit | MPa | DIN 53504 | 17,3 | 20,5 | 22 |
| Abrieb | mm³ | DIN 53516 | 84 | 78 | 79 |
| **Dynamische Eigenschaften/ Eplexor-Test* (Heizrate: 1 K/min)** | | | | | |
| tan d (0 °C) - Indiz für Nassrutschfestigkeit | | | 0,459 | 0,434 | 0,44 |
| tan d (60 °C) - Indiz für Rollwiderstand | | | 0,132 | 0,112 | 0,132 |

Das Reversionsschutzmittel Vulcuren wurde in zwei Dosierungen (0,5 phr sowie 1,0 phr - part per hunderd rubber) in die erste Mischstufe der Kautschukmischung hinzugegeben. Wie die Ergebnisse zeigen, steigt die Mooney Viskosität überraschenderweise nur unbedeutend an. Dem Fachmann ist bekannt, dass sich Kautschukmischungen mit einer Mooney-Viskositäten bis 150 sehr gut verarbeiten lassen. Des Weiteren zeigen die beiden Beispiele, dass überraschenderweise die Vulkanisationszeit bei höheren Dosiermengen an Vulcuren erheblich erniedrigt werden kann (um bis zu 80%; Kosteneinsparung durch weniger Energie und/oder die Produktivität kann gesteigert werden). Die Messwerte der mechanischen Eigenschaften wie Härte (Shore A), Modul 300, Bruchdehnung, Zugfestigkeit sowie Abrieb bleiben nahezu konstant im Rahmen der Fehlerabweichung. Abschließend ist zu erwähnen, dass die Messdaten der dynamischen Eigenschaften wie tan delta gemessen bei 0 Grad Celsius nahezu konstant sind, jedoch dass die Werte bei tan delta (gemessen bei 60°C) mit steigender Dosiermenge an Vulcuren niedriger werden. Dies ist ein Indiz dafür, dass durch die Zugabe des Vulcuren in der ersten Mischstufe, eine Verbesserung des Rollwiderstands erreicht werden kann.

## Patentansprüche

1. Verfahren zur Herstellung von Kautschukmischungen in einem Mischprozess mit mehreren Mischstufen, wobei diese ggf. in mehrere Teilschritte unterteilt sein können, umfassend das Mischen folgender Komponenten:
- ein oder mehrere Kautschuke,
- ein oder mehrere hydroxylgruppenhaltige oxidische Füllstoffe,
- ein oder mehrere schwefelhaltige siliciumorganische und/oder eine oder mehrere hydroxypölysulfidische Verbindungen,
- 1,6-Bis(N,N-dibenzylthiocarbamoyldithio)hexan (CAS-Nr.: 151900-44-6), wobei dieses in der ersten Mischstufe eingemischt wird.
- ein oder mehrere Vulkanisationsadditive,
- ein oder mehrere Kautschukadditive.

2. Verfahren nach Anspruch 1, **dadurch gekennzeichnet, dass** ein oder mehrere Reversionsschutzmittel in der ersten Mischstufe in mindestens zwei Teilschritten, vorzugweise in mindestens zwei Portionen, zugesetzt werden.

3. Verfahren nach Anspruch 2, **dadurch gekennzeichnet, dass** 0,1 bis 20 Gew.-% Reversionsschutzmittel, vorzugsweise 0,2 bis 10 Gew.-% und besonders bevorzugt 0,3 bis 3 Gew.-% jeweils bezogen auf die eingesetzte Menge an Kautschuk eingesetzt wird.

4. Verfahren nach Anspruch 2, **dadurch gekennzeichnet, dass** in der ersten Mischstufe bei einer Temperatur von 120°C - 170°C vermischt wird.

5. Verfahren nach den Anspruch 1, **dadurch gekennzeichnet, dass**
- ein oder mehrere hydroxylgruppen-haltige oxidische Füllstoffe,
- ein oder mehrere schwefelhaltige siliciumorganische und/oder eine oder mehrere hydroxypolysulfidische Verbindungen und
- ein oder mehrere Reversionsschutzmittel in mindestens zwei Teilschritten in der ersten Mischstufe, in mindestens zwei Portionen hinzugegeben werden.

6. Verfahren nach den Ansprüchen 1 bis 5, **dadurch gekennzeichnet, dass** in der zweiten Mischstufe Kautschuk- sowie Vulkanisationsadditive bei < 140°C, vorzugsweise < 100°C, zugegeben werden, wobei zwischen der ersten und zweiten Mischstufe die Kautschukmischung abgekühlt wird.

7. Verfahren nach Anspruch 6, **dadurch gekennzeichnet, dass** zwischen der ersten und der zweiten Mischstufe ein Nachzwicken der Kautschukmischung durchgeführt wird.

## Claims

1. Process for producing rubber mixtures in a mixing process with a plurality of mixing stages, where these can optionally be divided into a plurality of sub-steps, comprising the mixing of the following components:
- one or more rubbers,
- one or more hydroxylated oxidic fillers,
- one or more sulphur-containing organosilicon and/or one or more hydroxypolysulphidic compounds,
- 1,6-bis(N,N-dibenzylthiocarbamoyldithio)hexane (CAS No.: 151900-44-6), where this is incorporated into the mixture in the first mixing stage,
- one or more vulcanization additives,
- one or more rubber additives.

2. Process according to Claim 1, **characterized in that** one or more reversion stabilizer(s) is/are added in the first mixing stage in at least two sub-steps, preferably in at least two portions.

3. Process according to Claim 2, **characterized in that** the amount of reversion stabilizer used is from 0.1 to 20% by weight, preferably from 0.2 to 10% by weight and particularly preferably from 0.3 to 3% by weight, based in each case on the amount of rubber used.

4. Process according to Claim 2, **characterized in that**, in the first mixing stage, mixing takes place at a temperature of from 120°C to 170°C.

5. Process according to Claim 1, **characterized in that**
- one or more hydroxylated oxidic fillers,
- one or more sulphur-containing organosilicon and/or one or more hydroxypolysulphidic compounds and
- one or more reversion stabilizers are added in at least two sub-steps in the first mixing stage, in at least two portions.

6. Process according to Claims 1 to 5, **characterized in that**, in the second mixing stage, rubber additives, and also vulcanization additives, are added at < 140°C, preferably < 100°C, where the rubber mixture is cooled between the first and second mixing stage.

7. Process according to Claim 6, **characterized in that**, between the first and the second mixing stage, the rubber mixture is subjected to a further mastication process.

## Revendications

1. Procédé pour la préparation de compositions de caoutchouc dans un processus de mélange à plusieurs stades de mélange, ceux-ci pouvant éventuellement être divisés en plusieurs étapes partielles, comprenant le mélange des composants suivants :
- un ou plusieurs caoutchoucs,
- une ou plusieurs charges de type oxyde contenant des groupes hydroxy,
- un ou plusieurs composés organosiliciés soufrés et/ou un ou plusieurs composés de type hydroxypolysulfure,
- du 1,6-bis(N,N-dibenzylthiocarbamoyldithio)hexane (n° CAS : 151900-44-6), ce dernier étant incorporé dans le premier stade de mélange,
- un ou plusieurs additifs de vulcanisation,
- un ou plusieurs additifs pour caoutchouc.

2. Procédé selon la revendication 1, **caractérisé en ce que** dans le premier stade de mélange on ajoute un ou plusieurs agents anti-réversion en au moins deux étapes partielles, de préférence en au moins deux portions.

3. Procédé selon la revendication 2, **caractérisé en ce qu'**on utilise 0,1 à 20 % en poids d'agent anti-réversion, de préférence 0,2 à 10 % en poids et de façon particulièrement préférée 0,3 à 3 % en poids, chaque fois par rapport à la quantité de caoutchouc utilisée.

4. Procédé selon la revendication 2, **caractérisé en ce que** dans le premier stade de mélange on effectue le mélange à une température de 120 °C - 170 °C.

5. Procédé selon la revendication 1, **caractérisé en ce qu'**on ajoute
- une ou plusieurs charges de type oxyde contenant des groupes hydroxy,
- un ou plusieurs composés organosiliciés soufrés et/ou un ou plusieurs composés de type hydroxypolysulfure et
- un ou plusieurs agents anti-réversion en au moins deux étapes partielles dans le premier stade de mélange, en au moins deux portions.

6. Procédé selon les revendications 1 à 5, **caractérisé en ce que** dans le deuxième stade de mélange on ajoute des additifs pour caoutchouc ainsi que de vulcanisation, à < 140 °C, de préférence < 100 °C, la composition de caoutchouc étant refroidie entre le premier et le deuxième stade de mélange.

7. Procédé selon la revendication 6, **caractérisé en ce qu'**entre le premier et le deuxième stade de mélange on effectue un post-pincement de la composition de caoutchouc.
